# EUROPEAN PATENT SPECIFICATION

(11) **EP 1 529 676 B1**
(45) Date of publication and mention of the grant of the patent: **02.05.2007**
(21) Application number: 04026553.0
(22) Date of filing: 09.11.2004
(51) Int. Cl.: B60K 20/00, B60K 20/02, F16H 59/02

(54) **Vehicle shift lever device**
Fahrzeugschalthebelvorrichtung
Dispositif de levier de changement de vitesses pour véhicules

(30) Priority: 10.11.2003 JP 2003379615
(43) Date of publication of application: 11.05.2005
(73) Proprietor: KABUSHIKI KAISHA TOKAI-RIKA-DENKI-SEISAKUSHO, Niwa-gun, Aichi-ken (JP)
(72) Inventor: Kato, Masashi, Ohguchi-cho Niwa-gun Aichi-ken (JP)
(74) Representative: Goddar, Heinz J.

(56) References cited:
- WO-A-00/32434
- DE-A1- 2 252 391
- US-A- 3 470 763
- US-A- 3 747 431

## Description

### BACKGROUND OF THE INVENTION

### Field of the Invention

The present invention relates to a shift lever device which is connected to a transmission of a vehicle and is for shifting the transmission.

### Description of the Related Art

A shift lever device for shifting a transmission of a vehicle has a shift lever. The shift lever is insert molded integrally with a lever base member (lever holder) made of resin, and the lever base member is rotatably supported at a shaft. The shift lever (lever base member) is connected to the transmission of the vehicle via a control lever or a control cable or the like. In this way, when the shift lever is rotated, the rotation of the shift lever is transmitted via the control lever or the control cable or the like, such that the transmission is shifted.

In such a conventional shift lever device, a structure has been proposed which can absorb the impact energy when a large impact force directed toward the bottom in the axial direction is applied to the shift lever (see, for example, Japanese Patent Application Laid-Open (JP-A) No. 10-59007).

In the conventional shift lever device disclosed in this JP-A No. 10-59007, the shift lever is press-fit into the lever holder. When a large impact force is applied to the shift lever, the impact energy is absorbed by the shift lever falling out from the lever holder.

In the conventional shift lever device disclosed in JP-A No. 10-59007, although the impact energy can be absorbed once (instantaneously) by the shift lever falling out from the lever holder, thereafter, the shift lever which has fallen out collides with another member, or the like, such that there remains a state in which an impact load is again applied. As a result, there is the drawback that the impact energy cannot be sufficiently absorbed over the entire region of the stroke of the falling-out movement of the shift lever, and further improvement in the impact absorbing characteristic is desired.

US3747431 discloses a safety shifting lever for the transmission of motor vehicles according to the preamble of claim 1, having two mutually displaceable telescopically guided lever parts. The two parts are normally maintained in a first position with respect to one another corresponding to normal shifting operations. Provisions are made for permitting relative axial displacement of the lever parts under the influence of axial pressure forces that are larger than the forces necessary for shifting the transmission. The two parts are guided one within the other, whereby the part 1 can be displaced over the part 2 against the force of a coil spring

### SUMMARY OF THE INVENTION

In view of the aforementioned, an object of the present invention is to provide a shift lever device whose impact energy absorbing characteristic is greatly improved, and which can realize this improvement by a simple structure.

A first aspect of the present invention provides a shift lever device formed by a shift lever made of metal being integrally insert molded with a lever base member made of resin, the shift lever device being connected to a transmission of a vehicle and provided for shifting the transmission by transmitting rotation of the shift lever to the transmission, the shift lever device having: an engaging portion formed along a predetermined range of an axial direction of the shift lever at a portion of the shift lever where the shift lever is insert molded at the lever base member, and when a predetermined load directed downward in the axial direction of the shift lever is applied to the shift lever, the engaging portion enables the shift lever to move along the axial direction and separate from the lever base member; and a plurality of ribs formed integrally with the lever base member so as to correspond to a lowermost end portion of the shift lever, the ribs being lined-up along the axial direction of the shift lever so as to be separated from one another by predetermined intervals.

In the above-described shift lever device, usually, the shift lever is insert molded integrally with the lever base member, and the transmission can be shifted by an arbitrary shift range being selected by the shift lever being shifted.

Here, when the shift lever receives a large impact force which is directed downward in the axial direction (i.e., at the time when a predetermined load is applied), the integral holding by the engaging portion together with the lever base member is cancelled, and the shift lever falls out along the axial direction while separating from the lever base member. Moreover, the shift lever moves downward in the axial direction while the lowermost end portion of the shift lever presses the ribs and breaks through the ribs (i.e., while absorbing the impact energy).

In this way, after the integral holding by the engaging portion together with the lever base member is cancelled, the shift lever moves downward in the axial direction while thrusting through the plurality of ribs. The impact energy (impact force) which the shift lever has received can thereby be absorbed. In particular, in this case, a plurality of the ribs are lined up so as to be separated from one another by predetermined intervals along the axial direction of the shift lever. Therefore, even after the shift lever separates from the lever base member and falls out along the axial direction, the impact energy (impact force) can be absorbed in continuation thereafter, and the impact energy can be absorbed gradually and sufficiently.

The magnitude of the energy which can be absorbed and the absorption characteristic can be arbitrarily set (adjusted) by appropriately adjusting the length of the engaging portion (the length thereof along the axial direction of the shift lever), the thickness between the engaging portion and the surface of the lever base member (the wall thickness of the lever base member in a vicinity of the engaging portion), the thicknesses of the ribs, the intervals between the respective ribs, the number of ribs, and the like.

In the first aspect, the lowermost end portion of the shift lever reaches an outer surface of the lever base member, and the engaging portion is formed at a lower end portion of the shift lever.

Further, a distance from the lowermost end portion of the shift lever to a rib which is positioned furthest upward among the plurality of ribs, is set to be greater than a length of the engaging portion in the axial direction.

In the above-described shift lever device, at the time when the shift lever receives a large impact force which is directed downward in the axial direction, and the integral holding by the engaging portion together with the lever base member is cancelled, and the impact energy (impact force) is absorbed while the shift lever thrusts through the plural ribs, the engaging portion abuts the ribs after having completely come out of the lever base member (i.e., after the integral holding has completely been cancelled). Therefore, the impact energy (impact load) can be absorbed even more effectively.

Further, the engaging portion is a knurled portion which has been subjected to knurling.

It is preferable that the knurled portion is so-called "double-cut knurled".

A second aspect of the present invention provides a method for absorbing impact energy in the shift lever device of the first aspect at a time when the predetermined load directed downward in the axial direction of the shift lever is applied to the shift lever, the method including: moving the shift lever downward in the axial direction such that the shift lever separates from the lever base member along the axial direction; and gradually absorbing the impact energy by the shift lever colliding respectively with the plurality of ribs which are provided so as to correspond to the lowermost end portion of the shift lever.

### BRIEF DESCRIPTION OF THE DRAWINGS

Fig. 1 is a sectional view, at a usual time, showing the structure of a shift lever device relating to the present invention.
Fig. 2 is a sectional view, at a time when a predetermined load is applied to a shift lever, showing the structure of the shift lever device relating to the present invention.

### DETAILED DESCRIPTION OF THE INVENTION

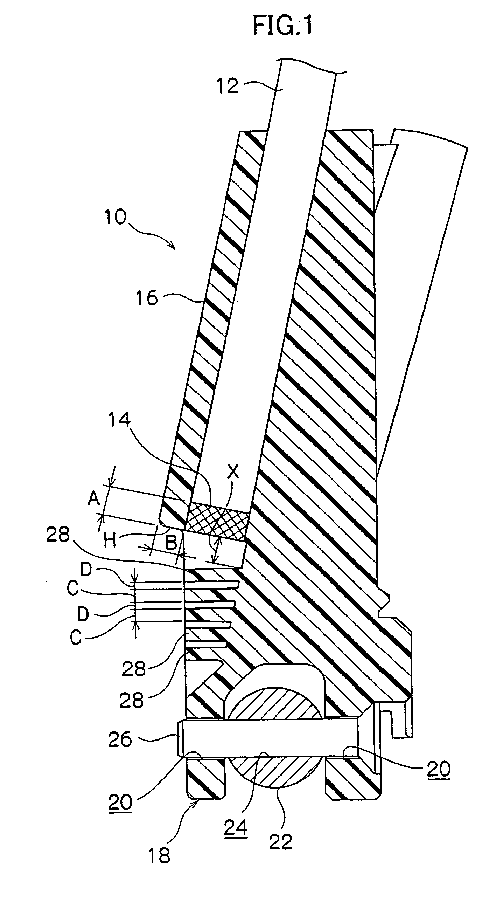

The structure of a shift lever device 10 relating to an embodiment of the present invention is shown in Fig. 1 in a sectional view.

The shift lever device 10 has a shift lever 12 for shifting. The shift lever 12 is formed of metal (e.g., S45C). A knurled portion 14 serving as an engaging portion is formed over a predetermined range in the axial direction at the lower end portion of the shift lever 12. This knurled portion 14 is, for example, "double-cut knurled".

The lower portion of the shift lever 12 is mounted to a lever base member 16. The lever base member 16 is formed of resin (e.g., PA-G), and is formed in the shape of a block on the whole. A bifurcated portion 18 which is formed in the shape of two prongs (U-shaped in sectional view) is formed at the bottom end portion of the lever base member 16. Supporting holes 20 are formed in the respective prongs of the bifurcated portion 18. The lower portion of the shift lever 12 is integrally insert molded with the lever base member 16. The lower end portion of the shift lever 12 reaches an outer surface H of the lever base member 16, and in the present embodiment, is substantially flush therewith.

Here, as described above, at the portion of the shift lever 12 which portion is insert molded with the lever base member 16, the knurled portion 14 is formed over a predetermined range in the axial direction, and the shift lever 12 is integral with the lever base member 16. However, when a predetermined load F (a predetermined pulling-out load) directed downward in the axial direction of the shift lever 12 is applied, the integral holding by the knurled portion 14 together with the lever base member 16 is cancelled, and the shift lever 12 moves along the axial direction so as to separate from the lever base member 16 (i.e., the shift lever 12 moves so as to fall out).

A shaft 22 serving as a supporting shaft is disposed in the bifurcated portion 18 of the lever base member 16. A through hole 24 is formed in the shaft 22, and the shaft 22 is supported so as to be rotatable along the transverse direction of the vehicle. Due to the shaft 22 being disposed in the bifurcated portion 18 of the lever base member 16 and a pin 26 passing through the supporting holes 20 and the through hole 24, the lever base member 16 (the shaft lever 12) is connected to and supported at the shaft 22. Accordingly, the lever base member 16 (the shift lever 12) can rotate in the longitudinal direction of the vehicle (the shifting direction) around the shaft 22, and can also rotate around the pin 26 (the selecting direction).

A plurality (five in the present embodiment) of ribs 28 are formed integrally with the lever base member 16. The ribs 28 are formed integrally with the lever base member 16 so as to correspond to the lowermost end portion of the shift lever 12 (i.e., the knurled portion 14). The ribs 28 are lined-up along the axial direction of the shift lever 12 so as to be spaced apart from each other at predetermined intervals. After the integral holding by the knurled portion 14 together with the lever base member 16 is cancelled and the shift lever 12 moves along the axial direction so as to separate from the lever base member 16 (moves so as to fall out) as described above, the plurality of ribs 28 engage the lowermost end portion of the shift lever 12.

Here, in the present embodiment, a distance X from the lowermost end portion of the shift lever 12 to the rib 28 which is positioned the furthest upward among the plurality of ribs 28, is set so as to be longer than a length A (the length along the axial direction of the shift lever 12) of the knurled portion 14.

The lever base member 16 having the above-described structure is connected to the transmission of a vehicle via an unillustrated control lever or control cable or the like. The transmission can be shifted due to the shift lever 12 being rotated.

Next, operation of the shift lever device 10 relating to the present embodiment will be described.

In the shift lever device 10, usually, the shift lever 12 is insert molded integrally with the lever base member 16, and the transmission is shifted by an arbitrary shift range being chosen by the shift lever 12 being rotated in the shifting direction and the selecting direction.

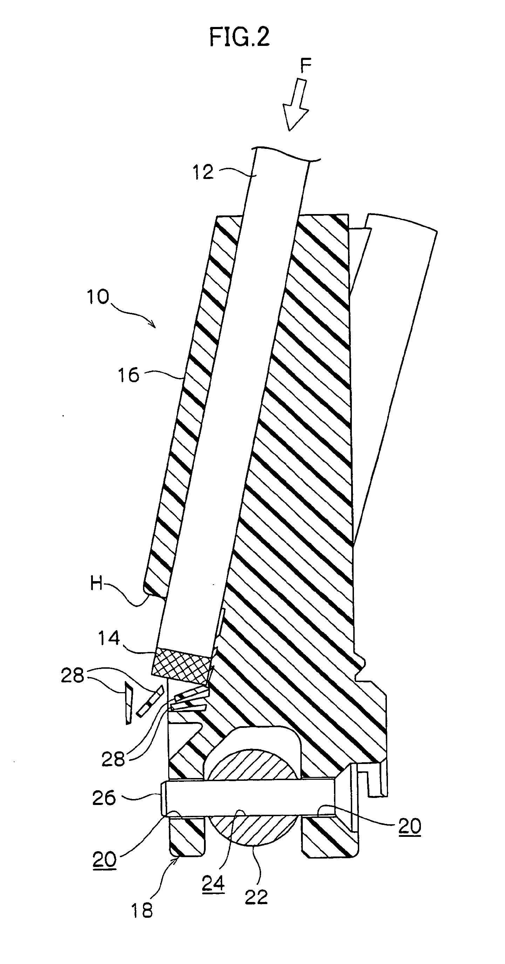

Here, as shown in Fig. 2, when the shift lever 12 receives a large impact force downward in the axial direction (i.e., when a load exceeding a predetermined load F at the knurled portion 14 is applied) such as at the time when the vehicle rapidly decelerates or the like, the integral holding by the knurled portion 14 together with the lever base member 16 is cancelled, and the shift lever 12 falls out along the axial direction while separating from the lever base member 16. Moreover, the shift lever 12 moves downward in the axial direction while the lowermost end portion thereof pushes the ribs 28 and breaks through the ribs 28 (i.e., while the ribs 28 absorb the impact energy).

In this way, after the integral holding by the knurled portion 14 together with the lever base member 16 is cancelled, the shift lever 12 moves downward in the axial direction while thrusting through the plurality of ribs 28, and the impact energy (the impact force) which the shift lever 12 receives can be absorbed.

In this case in particular, a plurality of the ribs 28 are disposed in a row along the axial direction of the shift lever 12 so as to be separated from one another by predetermined intervals. Therefore, even after the shift lever 12 has separated from the lever base member 16 and fallen out along the axial direction, the impact energy (impact force) can be absorbed in continuation thereafter, and the impact energy can be gradually and sufficiently absorbed.

Further, the distance X from the lowermost end portion of the shift lever 12 to the rib 28 positioned the furthest upward among the plurality of ribs 28, is set to be greater than the length A of the knurled portion 14 (the length of the knurled portion 14 along the axial direction of the shift lever 12). Therefore, at the time when the shift lever 12 receives a large impact force directed downward in the axial direction, and the integral holding by the knurled portion 14 together with the lever base member 16 is cancelled, and the impact energy (the impact force) is absorbed as the shift lever 12 breaks through the plurality of ribs 28, the knurled portion 14 abuts the ribs 28 after completely coming out from the lever base member 16 (i.e., after the integral holding has been completely cancelled). Therefore, the impact energy (impact force) can be absorbed even more effectively.

Note that, in the present embodiment, the knurled portion 14 formed at the shift lever 12 is so-called "double-cut knurled". However, the knurled portion 14 is not limited to the same, and may be knurled in another configuration. Further, a structure which exhibits an equivalent function, such as a convex and concave shaped structure or a wedge shaped structure or the like, may be used.

In the present embodiment, five of the ribs 28 are provided at predetermined intervals, but the number of the ribs 28 is not limited to five, and may be increased or decreased appropriately.

By adjusting appropriately not only the number of the ribs 28, but also, as shown in Fig. 1, the length A of the knurled portion 14, a thickness B between the knurled portion 14 and the surface of the lever base member 16 (the wall-thickness of the lever base member 16 in a vicinity of the knurled portion 14), a thickness C of the ribs 28, an interval D between the respective ribs 28, or the like, the magnitude of the energy which can be absorbed and the absorption characteristic can be arbitrarily set and adjusted.

The shift lever device 10 of the present invention is not limited to a floor shift type provided at the central console of an automobile, and, for example, may also be applied to a instrument panel shift type lever provided at the instrument panel, or the like.

As described above, the shift lever device relating to the present invention has the excellent effects that the characteristic of absorbing the impact energy applied to the shift lever is greatly improved, and that this improvement can be realized by a simple structure.

## Claims

1. A shift lever device (10) formed by a shift lever (12), the shift lever device (10) being connected to a transmission of a vehicle and provided for shifting the transmission by transmitting rotation of the shift lever (12) to the transmission **characterized in that**, the shift lever is made of metal being integrally insert molded with a base member (16) made of resin, and that the shift lever device comprises:
an engaging portion (14) formed along a predetermined range of an axial direction of the shift lever (12) at a portion of the shift lever (12) where the shift lever (12) is insert molded at the lever base member (16), and when a predetermined load (F) directed downward in the axial direction of the shift lever (12) is applied to the shift lever (12), the engaging portion (14) enables the shift lever (12) to move along the axial direction and separate from the lever base member (16); and
a plurality of ribs (28) formed integrally with the lever base member (16) so as to correspond to a lowermost end portion of the shift lever (12), the ribs (28) being lined-up along the axial direction of the shift lever (12) so as to be separated from one another by predetermined intervals (D).

2. The shift lever device (10) of claim 1, wherein the lowermost end portion of the shift lever (12) reaches an outer surface (H) of the lever base member (16), and the engaging portion (14) is formed at a lower end portion of the shift lever (12).

3. The shift lever device (10) of claim 1 or claim 2, wherein a distance (X) from the lowermost end portion of the shift lever (12) to a rib which is positioned furthest upward among the plurality of ribs (28), is set to be greater than a length (A) of the engaging portion (14) in the axial direction.

4. The shift lever device (10) of any of claims 1 through 3, wherein the plurality of ribs (28) are formed in a cantilevered manner at the lever base member (16).

5. The shift lever device (10) of any of claims 1 through 4, wherein dimensions, in the axial direction, of at least two of the ribs (28) among the plurality of the ribs (28), are substantially the same.

6. The shift lever device (10) of any of claims 1 through 4, wherein the ribs (28) are formed such that dimensions, in the axial direction, of the plurality of the ribs (28) are respectively different.

7. The shift lever device (10) of any of claims 1 through 6, wherein the engaging portion (14) is a knurled portion (14) which has been subjected to knurling.

8. A method for absorbing impact energy in the shift lever device (10) of any of claims 1 through 7 at a time when the predetermined load (F) directed downward in the axial direction of the shift lever (12) is applied to the shift lever (12), the method comprising:
moving the shift lever (12) downward in the axial direction such that the shift lever separates from the lever base member (16) along the axial direction; and
gradually absorbing the impact energy by the shift lever (12) colliding respectively with the plurality of ribs (28) which are provided so as to correspond to the lowermost end portion of the shift lever (12).

9. The method for absorbing impact energy of claim 8, wherein a magnitude of absorbed energy is set by adjusting a length (A) of the engaging portion (14) along the axial direction of the shift lever (12), a thickness (B) between the engaging portion (14) and a surface of the lever base member (16), a thickness (C) of each of the ribs (28), intervals (D) between the respective ribs (28), and a number of the ribs (28).

## Patentansprüche

1. Schalthebelvorrichtung (10), die von einem Schalthebel (12) gebildet wird, wobei die Schalthebelvorrichtung (10) mit einem Getriebe eines Fahrzeugs verbunden und zum Schalten des Getriebes durch Übertragen einer Drehung des Schalthebels (12) auf das Getriebe vorgesehen ist, **dadurch gekennzeichnet, daß** der Schalthebel aus Metall hergestellt ist, das mit einem aus Harz hergestellten Basiselement (16) durch Insert Molding integral ausgebildet ist, und daß die Schalthebelvorrichtung umfaßt:
einen Eingriffsabschnitt (14), der entlang eines vorab festgelegten Bereiches einer axialen Richtung des Schalthebels (12) an einem Abschnitt des Schalthebels (12) ausgebildet ist, wo der Schalthebel (12) an dem Hebelbasiselement (16) durch Insert Molding ausgebildet ist, und, wenn eine nach unten in der axialen Richtung des Schalthebels (12) gerichtete vorab festgelegte Kraft (F) auf den Schalthebel (12) ausgeübt wird, ermöglicht, daß der Schalthebel (12) sich entlang der axialen Richtung und getrennt von dem Hebelbasiselement (16) zu bewegen, und
eine Vielzahl von Rippen (28), die mit dem Hebelbasiselement (16) so integral ausgebildet sind, daß sie einem untersten Endabschnitt des Schalthebels (12) entsprechen, wobei die Rippen (28) entlang der axialen Richtung des Schalthebels (12) so aufgestellt sind, daß sie in vorab festgelegten Abständen (D) voneinander getrennt sind.

2. Schalthebelvorrichtung (10) nach Anspruch 1, **dadurch gekennzeichnet, daß** der unterste Endabschnitt des Schalthebels (12) eine Außenfläche (H) des Hebelbasiselements (16) erreicht und der Eingriffsabschnitt (14) an einem unteren Endabschnitt des Schalthebels (12) ausgebildet ist.

3. Schalthebelvorrichtung (10) nach Anspruch 1 oder Anspruch 2, **dadurch gekennzeichnet, daß** ein Abstand (X) von dem untersten Endabschnitt des Schalthebels (12) zu einer Rippe, die von der Vielzahl von Rippen (28) zuoberst positioniert ist, so eingestellt ist, daß er größer als eine Länge (A) des Angriffabschnitts (14) in der axialen Richtung ist.

4. Schalthebelvorrichtung (10) nach einem der Ansprüche 1 bis 3, **dadurch gekennzeichnet, daß** die Vielzahl von Rippen (28) in einer freischwebenden Art an dem Hebelbasiselement (16) ausgebildet ist.

5. Schalthebelvorrichtung (10) nach einem der Ansprüche 1 bis 4, **dadurch gekennzeichnet, daß** Abmessungen, in der axialen Richtung, von wenigstens zwei Rippen (28) der Vielzahl von Rippen (28) im wesentlichen dieselben sind.

6. Schalthebelvorrichtung (10) nach einem der Ansprüche 1 bis 4, **dadurch gekennzeichnet, daß** die Rippen (28) so ausgebildet sind, daß Abmessungen, in der axialen Richtung, der Vielzahl von Rippen (28) jeweils unterschiedlich sind.

7. Schalthebelvorrichtung (10) nach einem der Ansprüche 1 bis 6, **dadurch gekennzeichnet, daß** der Eingriffsabschnitt (14) ein gerändelter Abschnitt (14) ist, der einer Rändelung unterzogen wurde.

8. Verfahren zum Absorbieren von Stoßenergie in der Schalthebelvorrichtung (10) nach einem der Ansprüche 1 bis 7 zu dem Zeitpunkt, wenn die nach unten in der axialen Richtung des Schalthebels (12) gerichtete vorab festgelegte Kraft (F) auf den Schalthebel (12) ausgeübt wird, wobei das Verfahren umfaßt:
Hinabbewegen des Schalthebels (12) in der axialen Richtung, so daß sich der Schalthebel von dem Hebelbasiselement (16) entlang der axialen Richtung trennt, und
graduelles Absorbieren der Stoßenergie durch den Schalthebel (12), der jeweils mit der Vielzahl von Rippen (28) kollidiert, die so vorgesehen sind, daß sie mit dem untersten Endabschnitt des Schalthebels (12) übereinstimmen.

9. Verfahren zum Absorbieren von Stoßenergie nach Anspruch 8, **dadurch gekennzeichnet, daß** der Betrag der absorbierten Energie durch Einstellen einer Länge (A) des Eingriffsabschnitts (14) entlang der axialen Richtung des Schalthebels (12), einer Dicke (B) zwischen dem Eingriffsabschnitt (14) und einer Fläche des Hebelbasiselements (16), einer Dicke (C) jeder der Rippen (28), von Abständen (D) zwischen den jeweiligen Rippen (28) und einer Anzahl der Rippen (28) eingestellt wird.

## Revendications

1. Dispositif à levier de changement de vitesses (10) formé par un levier de changement de vitesses (12), lequel dispositif à levier de changement de vitesses (10) est connecté à la transmission d'un véhicule et sert au changement de vitesses de la transmission par une rotation de transmission du levier de changement de vitesses (12) vers la transmission, **caractérisé en ce que** le levier de changement de vitesses est fait d'un métal moulé par insertion d'un seul tenant avec un élément de base (16) fait de résine, et **en ce que** le dispositif à levier de changement de vitesses comprend :
- une partie de mise en prise (14) formée le long d'une plage prédéterminée d'une direction axiale du levier de changement de vitesses (12) au niveau d'une partie du levier de changement de vitesses (12) où le levier de changement de vitesses (12) est moulé par insertion au niveau de l'élément de base du levier (16), et, lorsqu'une charge prédéterminée (F) dirigée vers le bas dans la direction axiale du levier de changement de vitesses (12) est appliquée au levier de changement de vitesses (12), la partie de mise en prise (14) permet au levier de changement de vitesses (12) de se déplacer le long de la direction axiale et de se séparer de l'élément de base du levier (16) ; et
- Une pluralité de nervures (28) formées d'un seul tenant avec l'élément de base du levier (16) de manière à correspondre à la partie d'extrémité la plus basse du levier de changement de vitesses (12), lesquelles nervures (28) sont alignées le long de la direction axiale du levier de changement de vitesses (12) de manière à être séparées les unes des autres par des intervalles prédéterminés (D).

2. Dispositif à levier de changement de vitesses (10) selon la revendication 1, dans lequel la partie d'extrémité la plus basse du levier de changement de vitesses (12) atteint une surface externe (H) de l'élément de base du levier (16), tandis que la partie de mise en prise (14) est formée au niveau de la partie d'extrémité inférieure du levier de changement de vitesses (12).

3. Dispositif à levier de changement de vitesses (10) selon la revendication 1 ou 2, dans lequel une distance (X) entre la partie d'extrémité la plus basse du levier de changement de vitesses (12) et une nervure la plus éloignée vers le haut parmi la pluralité de nervures (28), est choisie de manière à être plus importante qu'une longueur (A) de la partie de mise en prise (14) dans la direction axiale.

4. Dispositif à levier de changement de vitesses (10) selon l'une quelconque des revendications 1 à 3, dans lequel la pluralité de nervures (28) est formée en quinconce au niveau de l'élément de base du levier (16).

5. Dispositif à levier de changement de vitesses (10) selon l'une quelconque des revendications 1 à 4, dans lequel les dimensions, dans la direction axiale, d'au moins deux nervures (28) parmi la pluralité de nervures (28), sont sensiblement identiques.

6. Dispositif à levier de changement de vitesses (10) selon l'une quelconque des revendications 1 à 4, dans lequel les nervures (28) sont formées de sorte que les dimensions, dans la direction axiale, de la réalité de nervures (28) sont sensiblement différentes.

7. Dispositif à levier de changement de vitesses (10) selon l'une quelconque des revendications 1 à 6, dans lequel la partie de mise en prise (14) est une partie moletée (14) qui a été soumise à un moletage.

8. Procédé d'absorption de l'énergie d'un impact dans le dispositif à levier de changement de vitesses (10) selon l'une quelconque des revendications 1 à 7 lorsqu'une charge prédéterminée (F) dirigée vers le bas dans la direction axiale du levier de changement de vitesses (12) est appliquée au levier de changement de vitesses (12), lequel procédé comprend les étapes consistant à :
- déplacer le levier de changement de vitesses (12) vers le bas dans la direction axiale de sorte que le levier de changement de vitesses se sépare de l'élément de base du levier (16) le long de la direction axiale ; et
- absorber graduellement l'énergie de l'impact en faisant que le levier de changement de vitesses (12) entre en collision respectivement avec la pluralité de nervures (28) qui sont disposées de manière à correspondre à la partie d'extrémité la plus basse du levier de changement de vitesses (12).

9. Procédé d'absorption de l'énergie d'impact selon la revendication 8, dans lequel une magnitude de l'énergie absorbée est définie en ajustant une longueur (A) de la partie de mise en prise (14) le long de la direction axiale du levier de changement de vitesses (12), une épaisseur (B) entre la partie de mise en prise (14) et une surface de l'élément de base du levier (16), une épaisseur (C) de chacune des nervures (28), les intervalles (D) entre les nervures (28) respectives, et le nombre des nervures (28).
